# EUROPÄISCHE PATENTSCHRIFT

(11) **EP 3 988 390 B1**
(45) Veröffentlichungstag und Bekanntmachung des Hinweises auf die Patenterteilung: **01.10.2025**
(21) Anmeldenummer: 21204348.3
(22) Anmeldetag: 22.10.2021
(51) Int. Cl.: B60P 3/32, B60W 50/14, G06Q 10/06, G07C 5/00, B60K 35/10, B60K 35/22, B60K 35/28, B60K 35/29, B60K 35/81, B60K 15/03

(54) **STEUERUNGSVERFAHREN FÜR EIN FREIZEITFAHRZEUG**
CONTROL METHOD FOR A RECREATIONAL VEHICLE
PROCÉDÉ DE COMMANDE D'UN VÉHICULE DE LOISIRS

(30) Priorität: 22.10.2020 DE 102020127903
(43) Veröffentlichungstag der Anmeldung: 27.04.2022
(73) Patentinhaber: Erwin Hymer Group SE, 88339 Bad Waldsee (DE)
(72) Erfinder: Strobel, Gero, 88339 Bad Waldsee (DE); Härle, Tim, 88339 Bad Waldsee (DE); Maucher, Hans-Martin, 88339 Bad Waldsee (DE); Caesar, Claudius, 88339 Bad Waldsee (DE)
(74) Vertreter: Müller Schupfner & Partner Patent- und Rechtsanwaltspartnerschaft mbB (Muc)

(56) Entgegenhaltungen:
- WO-A1-2020/183368
- US-A1- 2013 325 541
- US-A1- 2014 210 593

## Beschreibung

Die Erfindung betrifft ein Steuerungsverfahren für ein Freizeitfahrzeug nach dem Oberbegriff des Patentanspruchs 1.

Unter einem Freizeitfahrzeug wird vorliegend ein Fahrzeug verstanden, dass zumindest mithilfe von in diesem montierbaren Einrichtungen und Möbeln dem Nutzer eine Möglichkeit zum Schlafen und Wohnen in diesem Fahrzeug bietet. Für eine anderweitige Verwendung, wenn das Fahrzeug nicht als Freizeitfahrzeug zum Campen benutzt wird, können diese Einrichtungen und Möbel zumindest zum Teil ohne großen Aufwand entfernt werden. Weiterhin umfasst der Begriff auch alle Campingfahrzeuge wie Wohnmobile und Wohnwagen, wobei eine Motorisierung der Fahrzeuge nicht zwingend erforderlich ist und ein Freizeitfahrzeug insbesondere auch einen Anhänger umfasst. Solche Freizeitfahrzeuge zeichnen sich durch einen größeren Wohnaufbau aus, wobei in der überwiegenden Anzahl der Fälle nicht die Originalkarosserie beispielsweise eines Kleintransporters zum Einsatz kommt, sondern ein größerer Aufbau von dem Hersteller des Freizeitfahrzeugs auf einem Chassis aufgebaute wird. Bei einem Wohnanhänger als Freizeitfahrzeug wird regelmäßig ein Anhängerchassis genutzt, auf dem ein Wohnaufbau speziell aufgebaut wird.

In vielen Situationen muss bei einem Freizeitfahrzeug eine kompetente Überprüfung erfolgen und/oder es müssen bestimmte Arbeitsabläufe eingehalten werden, um das Fahrzeug betriebsbereit zu halten oder einen Campingaufenthalt bzw. ein Übernachten mit dem Fahrzeug vorzubereiten. Beispielsweise müssen Füllstände Tanks und Vorratsbehältern wie auch Abwasserbehältern sowohl von Einrichtungen des Wohnbereichs, aber auch des Fahrzeugs in Bezug auf dessen Motor und Antrieb sowie Fahrgestell regelmäßig geprüft und aufgefüllt werden bzw. es muss eine Entsorgung erfolgen beispielsweise des Abwassers. Hinzu kommen weitere Behältnisse wie etwa Gasflaschen und Toilettenkassetten. Weitere technische Komponenten sowie individuelles Gepäck erschweren dabei oftmals den Überblick auf das Gesamtsystem.

Es ist bekannt, hierfür Checklisten und Ablaufpläne für die durchzuführenden Arbeiten vorzusehen. Diese Ablaufpläne sind jedoch ein starres Konstrukt, indem sie immer den vollständigen Ablauf und unter bestimmten Annahmen darstellen. Selbst angereichert mit Daten und Eventualabläufen kann nicht immer verhindert werden, dass unnötige, verwirrende, oder unpassende Einträge bzw. Schritte dem Nutzer dargestellt werden. Ein aus der Alltagswelt bekanntes Beispiel für einen solchen Ablaufplan mit einem statischen bzw. starren Ablauf ist beispielsweise ein Kochrezept.

Ein Steuerungsverfahren für ein Freizeitfahrzeug des Stands der Technik zeigt die WO 2020/183368 A1.

Der vorliegenden Erfindung liegt die Aufgabe zugrunde, ein Steuerungsverfahren für ein Freizeitfahrzeug zur Verfügung zu stellen, mit dem die zuvor genannten Nachteile vermieden werden und jeder Nutzer schnell und effizient die zuvor beschriebenen Standardtätigkeiten und Situationen mit Unterstützung durchführen kann.

Diese Aufgabe wird durch ein Steuerungsverfahren für ein Freizeitfahrzeug mit den Merkmalen des unabhängigen Patentanspruchs 1 gelöst. Vorteilhafte Weiterbildungen der Erfindung sind in den Unteransprüchen angegeben.

Die Aufgabe wird erfindungsgemäß dadurch gelöst, dass bei einem Steuerungsverfahren für ein Freizeitfahrzeug, insbesondere Wohnmobil oder Wohnanhänger, mit Komponenten, die Einstellungen erfordern und oder befüllt werden können oder als Entsorgungskomponenten entleert werden müssen, sowie mit Sensorelementen zur Bestimmung des Zustands dieser Komponenten und einer Steuereinheit die mit den Sensorelementen verbunden ist sowie einer Benutzerschnittstelle, die Steuereinheit Ablaufpläne für durchzuführende Überprüfungen der Komponenten bzw. an diesen auszuführenden Arbeiten dem Benutzer über die Benutzerschnittstelle anzeigt, wobei abhängig von den Werten der Sensorelemente die Steuereinheit bestimmt, ob ein Schritt des Ablaufplans durchzuführen ist und/oder welche von mehreren alternativ möglichen Schritten durchzuführen sind.

Eine Fehlbedienung durch den Nutzer wird verhindert. Neulinge werden kompetent angeleitet. Nur das Nötigste wird dargestellt, um schnellen Erfolg zu erreichen. Das erhöht die Zufriedenheit des Nutzers und reduziert vorteilhaft Kosten im Kundenservice. Die erforderliche Zahl für eine Fahrzeugübergabe in der Vermietung von Freizeitfahrzeugen wird reduziert. Es erhöht sich ebenso der Fahrzeugnutzen, da das Fahrzeug leichter an Freunde und Bekannte ausgeliehen werden kann, ohne dass umfangreiche Erklärungen notwendig sind. Schließlich kann auch die Anzahl möglicher Nachfragen bei einem Händler nach dem Erwerb eines Freizeitfahrzeugs reduziert werden.

Vorteilhaft wird die Auswahl, ob ein Schritt oder welche von mehreren alternativ möglichen Schritten durchzuführen sind anhand der zuvor erfolgten Schritte von der Steuereinheit bestimmt.

Die Steuereinheit kann den Fortschritt in Bezug auf den gesamten Ablaufplan anzeigen.

Der interaktive und intelligente Ablaufplan erkennt automatisch über die Sensorelemente und den Kontext, die vorherigen Schritte, eines gewählten Ablaufplans, ob und welche Schritte für den Nutzer relevant sind. Es werden Daten dargestellt, die dem Nutzer kontextabhängig Hilfestellung bieten, um zügig alle relevanten Schritte des Ablaufplans erfolgreich abzuschließen. Irrelevante Schritte, oder Schritte, deren Kriterien bereits erfüllt sind werden übersprungen bzw. ausgeblendet.

Erfindungsgemäß können Stufen für die Detailliertheit und den Umfang von angezeigten Erläuterungen eingestellt werden.

Dadurch kann beispielsweise eine Anpassung erfolgen, ob der Nutzer bereits Erfahrung mit Freizeitfahrzeug oder Wohnmobilen hat oder völlig unerfahren ist und dementsprechend eine stärkere Unterstützung erfolgen soll.

Erfindungsgemäß sind Ablaufpläne für typische Situationen auswählbar, insbesondere "Abfahrt zu einer Reise", "Ankunft auf einem Campingplatz", "Abstellen zum autarken Übernachten", "Beenden einer Reise", "Sicherstellen der Winterfestigkeit".

Beispielsweise bei einer Ankunft am Campingplatz kann ein Ablaufplan die folgenden Schritte enthalten:
a.) Ist das Frischwasser voll?
   Dies wird ausgeblendet, abgehakt, oder ausgegraut, falls erfüllt, andernfalls besteht die Möglichkeit zum Bestätigen oder Verwerfen.
b.) Ist das Abwasser leer?
   Dies wird ebenfalls ausgeblendet, falls erfüllt, andernfalls besteht Möglichkeit zum Bestätigen oder Verwerfen.
c.) Parken
   Dies wird vom Nutzer bestätigt.
d.) Horizontales Ausrichten des Fahrzeugs
   Eine Wasserwaage erscheint beispielsweise in der App und es erfolgt eine Nutzerbestätigung. Alternativ kann ein automatisches Ausrichten bei Vorhandensein entsprechender Hubstützen erfolgen.
e.) Anschluss Landstrom?

Die leitende Verbindung wird durch Sensoren erfasst und von der App bestätigt.

Die Steuereinheit kann Informationen, vorzunehmende Schritte und Warnungen unterschiedlich optisch darstellen, insbesondere durch unterschiedliche Farben.

Es ist auch denkbar, das zuvor beschriebene Verfahren bei anderen Hardware-Plattformen mit verschiedenen Komponenten mit Nutzerinteraktion einzusetzen, beispielsweise bei Booten, Yachten oder Nutzfahrzeugen.

## Patentansprüche

1. Steuerungsverfahren für ein Freizeitfahrzeug, insbesondere Wohnmobil oder Wohnanhänger, mit Komponenten, die Einstellungen erfordern und oder befüllt werden können oder als Entsorgungskomponenten entleert werden müssen, sowie mit Sensorelementen zur Bestimmung des Zustands dieser Komponenten und einer Steuereinheit die mit den Sensorelementen verbunden ist sowie einer Benutzerschnittstelle,
**dadurch gekennzeichnet,**
**dass** die Steuereinheit Ablaufpläne für durchzuführende Überprüfungen der Komponenten bzw. an diesen auszuführenden Arbeiten dem Benutzer über die Benutzerschnittstelle anzeigt, wobei abhängig von den Werten der Sensorelemente die Steuereinheit bestimmt, ob ein Schritt des Ablaufplans durchzuführen ist und/oder welche von mehreren alternativ möglichen Schritten durchzuführen sind, dass Ablaufpläne für typische Situationen auswählbar sind und dass Stufen für die Detailliertheit und den Umfang von angezeigten Erläuterungen eingestellt werden können.

2. Steuerungsverfahren nach Anspruch 1,
**dadurch gekennzeichnet,**
**dass** die Auswahl, ob ein Schritt oder welche von mehreren alternativ möglichen Schritten durchzuführen sind anhand der zuvor erfolgten Schritte von der Steuereinheit bestimmt wird.

3. Steuerungsverfahren nach Anspruch 1 oder 2,
**dadurch gekennzeichnet,**
**dass** die Steuereinheit den Fortschritt in Bezug auf den gesamten Ablaufplan anzeigt.

4. Steuerungsverfahren nach einem der vorhergehenden Ansprüche,
**dadurch gekennzeichnet,**
**dass** Ablaufpläne für die typischen Situationen "Abfahrt zu einer Reise", "Ankunft auf einem Campingplatz", "Abstellen zum autarken Übernachten", "Beenden einer Reise" und "Sicherstellen der Winterfestigkeit" auswählbar sind.

5. Steuerungsverfahren nach einem der vorhergehenden Ansprüche,
**dadurch gekennzeichnet,**
**dass** die Steuereinheit Informationen, vorzunehmende Schritte und Warnungen unterschiedlich optisch darstellt, insbesondere durch unterschiedliche Farben.

## Claims

1. Control method for a recreational vehicle, in particular a motorhome or caravan, with components that require adjustments and/or can be filled or must be emptied as disposal components, as well as with sensor elements for determining the status of these components and a control unit connected to the sensor elements as well as a user interface,
**characterised in that**
the control unit displays schedules for checks to be carried out on the components or work to be carried out on them to the user via the user interface, wherein, depending on the values of the sensor elements, the control unit determines whether a step of the schedule is to be carried out and/or which of several alternative steps are to be carried out, that schedules are selectable for typical situations and that levels for the detailedness and the scope of displayed explanations can be set.

2. Control method according to claim 1,
**characterised in that**
the selection of whether a step or which of several alternative steps are to be carried out is determined by the control unit on the basis of the steps previously carried out.

3. Control method according to claim 1 or 2,
**characterised in that**
the control unit displays the progress in relation to the entire schedule.

4. Control method according to one of the preceding claims,
**characterised in that**
schedules for typical situations "departure on a journey", "arrival at a campsite", "parking for self-sufficient overnight stay", "end of a journey" and "ensuring winterisation" can be selected.

5. Control method according to one of the preceding claims,
**characterised in that**
the control unit presents information, steps to be taken and warnings in different visual forms, in particular using different colours.

## Revendications

1. Procédé de commande pour un véhicule de loisirs, en particulier un camping-car ou une caravane, comprenant des composants qui nécessitent des réglages et/ou peuvent être remplis ou doivent être vidés en tant que composants d'élimination, ainsi que des éléments formant capteurs destinés à déterminer l'état de ces composants et une unité de commande qui est reliée avec les éléments formant capteurs ainsi qu'une interface utilisateur, **caractérisé en ce que**
l'unité de commande indique à l'utilisateur, via l'interface utilisateur, des plans de déroulement pour effectuer des surveillances des composants ou exécuter des travaux sur ceux-ci, dans lequel, en fonction des valeurs des éléments formant capteurs, l'unité de commande détermine si une étape du plan de déroulement doit être exécutée et/ou laquelle d'une pluralité d'étapes alternativement possibles doit être exécutée, **en ce que** les plans de déroulement peuvent être choisis pour des situations typiques, et **en ce que** des niveaux de détail et d'ampleur d'explications affichées peuvent être réglés.

2. Procédé de commande selon la revendication 1,
**caractérisé en ce que**
la sélection quant à savoir si une étape ou laquelle de plusieurs étapes alternativement possibles doit être effectuée est déterminée par l'unité de commande à l'aide des étapes précédemment effectuées.

3. Procédé de commande selon la revendication 1 ou 2,
**caractérisé en ce que**
l'unité de commande affiche la progression concernant l'ensemble du plan de déroulement.

4. Procédé de commande selon l'une quelconque des revendications précédentes
**caractérisé en ce que**
les plans de déroulement pour les situations typiques « départ en voyage », « arrivée sur un terrain de camping », « stationnement pour nuitée en autonomie », « fin d'un voyage » et « assurer la résistance à l'hiver » peuvent être sélectionnés.

5. Procédé de commande selon l'une des revendications précédentes, **caractérisé en ce que** l'unité de commande fournit une représentation optique différente d'informations, d'étapes à réaliser et d'avertissements, en particulier au moyen de couleurs différentes.
